Europäisches Patentamt

European Patent Office

Office européen des brevets

(19)

(11) Veröffentlichungsnummer : **0 181 317**
**B1**

(12)

# EUROPÄISCHE PATENTSCHRIFT

(45) Veröffentlichungstag der Patentschrift :
05.04.89

(51) Int. Cl.⁴ : **B 22 F   3/10**

(21) Anmeldenummer : 85890263.8

(22) Anmeldetag : 23.10.85

(54) Verfahren zum Herstellen von porösen Filterkörpern aus Metallpulver.

(30) Priorität : 29.10.84 AT 3423/84

(43) Veröffentlichungstag der Anmeldung :
14.05.86 Patentblatt 86/20

(45) Bekanntmachung des Hinweises auf die Patenterteilung : 05.04.89 Patentblatt 89/14

(84) Benannte Vertragsstaaten :
DE FR GB IT

(56) Entgegenhaltungen :
DE—A— 3 045 265
DE—A— 3 244 640
PLANSEEBERICHTE   FÜR   PULVERMETALLURGIE,
Band 3, 1955, F. BENESOVSKY et al., "Borhaltige
Sinterlegierungen auf Eisenbasis", Seiten 57-70

(73) Patentinhaber : Miba Sintermetall Aktiengesellschaft
Hauptstrasse 3
A-4663 Laakirchen (AT)

(72) Erfinder : Jangg, Gerhard, Prof.
Weisenhorngasse 84
A-1023 Wien (AT)
Erfinder : Danninger, Herbert, Dr.
Graf-Sterhemberggasse 27/26
A-1040 Wien (AT)
Erfinder : Giahi-Chaloshtori, Mostaffa, Dipl.-Ing.
Mostgasse 8a/3
A-1040 Wien (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

## Beschreibung

Die Erfindung bezieht sich auf ein Verfahren zum Herstellen von porösen Filterkörpern aus Metallpulver, das in einer Form oder als geformter Preßling auf Sintertemperatur erwärmt und gesintert wird, wobei vor dem Einbringen des Metallpulvers in die Form bzw. vor dem Formpressen des Metallpulvers zumindest an die eine Oxidschicht aufweisenden Pulverkörner eine sauerstofffreie Borverbindung in Pulverform angelagert wird.

Bei der Herstellung von Sinterkörpern aus lose in eine Form geschütteten Metallpulvern, deren Pulverkörner mit einer Oxidschicht bedeckt sind, wie dies beispielsweise bei rostfreien und zunderfesten Stählen der Fall ist, ergeben sich Schwierigkeiten, weil durch die dichten und fest anhaftenden Oxidschichten die Ausbildung von metallischen Sinterbrücken während der Sinterung verhindert bzw. erschwert wird. Die Festigkeit solcher Sinterkörper bleibt daher völlig unbefriedigend. Die Herstellung brauchbarer Sinterkörper aus sauerstoffaffinen Metallpulvern wäre ohne zusätzliche Maßnahmen nur unter einer die Oxidschichten reduzierenden Atmosphäre möglich, was eine reine Wasserstoffatmosphäre erfordert, die jedoch für eine technische Anwendung aus Kostengründen nicht eingesetzt werden kann. Eine dieser zusätzlichen Maßnahmen besteht darin, die Metallpulver einer entsprechenden Vorverdichtung, beispielsweise durch ein isostatisches Pressen, auszusetzen, um die Oxidschichten von den Pulverteilchen teilweise abzuscheren, so daß sich an diesen abgescherten, oxidfreien Stellen metallische Brücken bilden können. Durch ein Vorverdichten der Metallpulver können somit poröse Körper mit einer ausreichenden mechanischen Festigkeit gesintert werden, die vor allem als Filterkörper eingesetzt werden. Allerdings ist auf Grund der notwendigen Vorverdichtung dieses Verfahren mit einem vergleichsweise großen Aufwand verbunden, wozu noch kommt, daß die Pulverkörner eine bestimmte Form aufweisen müssen, um einen für die Handhabung ausreichenden Zusammenhalt der Preßkörper sicherstellen zu können. Mit kugeligen Pulverkörnern lassen sich beispielsweise kaum Preßlinge mit einer genügend hohen Grünfestigkeit herstellen. Außerdem werden zum Erreichen entsprechender Festigkeiten der Sinterkörper vergleichsweise hohe Sintertemperaturen und längere Sinterzeiten erforderlich.

Um Sinterbrücken zwischen den metallischen Pulverteilchen sicherzustellen, ist es bekannt (CA-PS 974 800), die Oberflächenoxide der Pulverteilchen durch einen Zusatz von Borsäure ($H_3BO_3$) oder Bortrioxid ($B_2O_3$) unter Bildung von Metaboraten zu lösen. Da die Metaborate im Sinterkörper verbleiben, enthalten die Sinterkörper eine gewisse Menge an sauerstoffhaltiger Schlacke, was die mechanischen Eigenschaften dieser Sinterkörper erheblich verschlechtern kann. Auf Grund des Ziels, möglichst dichte Sinterkörper aus Sonderstählen herzustellen, eignet sich dieses bekannte Verfahren nicht für das Sintern poröser Filterkörper.

Schließlich ist es bekannt (F. Benesovsky et al., Planseeberichte für Pulvermetallurgie, Bd. 3, 1955 und Stahl und Eisen 78, 1958), dem Metallpulver vor dem Sintern ein Borid, in erster Linie Eisenborid, als sinteraktivierenden Zusatz beizumengen. Nach dem Pressen von Mischungen aus Sonderstahlpulvern mit bis zu 10 Gew. % Borid wird bei Temperaturen gesintert, bei denen sich flüssiges Eutektikum zwischen der Borverbindung und dem Metallpulver bildet. Die beim Sintern auftretende flüssige Phase bewirkt eine Desoxidation der Metallpulveroberflächen, wobei auf Grund der erleichterten Annäherung der Pulverteilchen bei der Sinterung ein hochdichter Sinterkörper erhalten wird, der für den Einsatz als Filter unbrauchbar ist.

Der Erfindung liegt somit die Aufgabe zugrunde, diese Mängel zu vermeiden und ein Verfahren der eingangs geschilderten Art anzugeben, mit dessen Hilfe in einfacher Weise poröse Filterkörper hoher Festigkeit aus sauerstoffaffinen Metallen gesintert werden können.

Die Erfindung löst die gestellte Aufgabe dadurch, daß dem Metallpulver als sauerstofffreie Borverbindung entweder Bornitrid oder ein Borid in einer Menge von höchstens 1 Gew. % beigemischt wird und daß dann das Pulvergemisch bei einer in °C angegebenen Temperatur zwischen $T_1 = 950 + 450d^{1/2} - 150 g$ und $T_2 = 1\,100 + 450d^{1/2} - 150 g$ beim Einsatz von Bornitrid und zwischen $T_{1'} = 1\,080 + 250 d^{1/2} - 250 g$ und $T_{2'} = 1\,200 + 250d^{1/2} - 250 g$ beim Einsatz eines Borides gesintert wird, wobei für d der in mm gemessene mittlere Korndurchmesser des Metallpulvers und für g der Zusatz der sauerstofffreien Borverbindung in Gew. % einzusetzen sind.

Bei der Sinterung von porösen Filterkörpern werden zwar feste Sinterbrücken angestrebt, doch soll eine Sinterschwindung vermieden bzw. in geringen Grenzen gehalten werden. Bei der Einhaltung der angegebenen Sinterbedingungen, die auf die Menge der sauerstofffreien Borverbindung und auf die Korngröße des Metallpulvers abgestimmt sein müssen, gelingt es in überraschender Weise, auch durch ein Flüssigphasensintern unter Zusatz von Boriden hochporöse Sinterkörper mit hohen Festigkeiten aus Metallpulvern herzustellen, die üblicherweise mit einer schwer reduzierbaren Oxidschicht bedeckt sind. Die Begrenzung des Anteils an Boridpulver mit 1 Gew. % bewirkt im Zusammenhang mit einer auf die Menge des Boridzusatzes und die Korngröße des Metallpulvers abgestimmten Sintertemperatur eine Sinterung mit einer sehr geringen Sinterschwindung. Steigt die Korngröße des Metallpulvers an, was mit einer Verringerung der Pulveroberfläche gleichzusetzen ist, so muß die Sintertemperatur gesteigert werden, wobei sich zwischen der Steigerung der Sintertemperatur und der Korngröße ein Zusammenhang zweiter Ordnung ergibt. Bei einer Vergrößerung des Zusatzes an Borid ist bei einer niedrigeren Temperatur zu sintern, um bei einer ausreichenden Festigkeit die Sinterschwindung hintanzuhalten. Eine geringe Sinterschwindung wird nicht nur toleriert, sondern ist auch notwendig, damit die gesinterten Schüttfilter aus den Formen entnommen werden können und ein Aufsintern auf Formkerne vermieden wird. Die Zug- und Schlagfestigkeit sowie die Bruchdehnungen solcher poröser Filterkörper entsprechen den Werten von ohne Boridzusatz aus vorgepreßten Pulvern bei höheren Temperaturen gesinterten Körpern und übertreffen sie zum Teil beträchtlich.

Besonders günstige Sinterergebnisse werden erhalten, wenn an Stelle eines Borids Bornitrid verwendet wird. Das Bornitridpulver setzt sich unter Abspaltung von Stickstoff mit den Metallpulvern zu Boriden um, die die eutektischen Phasen beim Sintern bilden. Bei Verwendung von Bornitrid sind im allgemeinen etwas höhere Sintertemperaturen und geringere Zusatzmengen notwendig. Die Korngröße des Metallpulvers hat dabei einen größeren, die Menge des Bornitridzusatzes jedoch einen geringeren Einfluß auf die günstigste Sintertemperatur als bei Zusatz von Metallboriden. Bornitrid setzt sich mit den Metallpulvern während des Sinterns langsam um, so daß die Menge der flüssigen Phase zu Beginn des Sinterns gering ist und sich erst während des Sinterns erhöht. Dies erlaubt ein gleichmäßiges Sintern und ermöglicht eine gute Reproduzierbarkeit der Eigenschaften.

Wichtig für ein gutes Sinterergebnis ist eine möglichst gleichmäßige Verteilung der zugesetzten, sauerstofffreien Borverbindung. Aus diesem Grunde soll das Pulver der Borverbindung möglichst feinkörnig sein. In der Praxis hat sich herausgestellt, daß ein Boridpulver mit einem mittleren Korndurchmesser kleiner als 20 μm, vorzugsweise kleiner als 10 μm, den gestellten Anforderungen gut entspricht. Beim Einsatz von Bornitridpulver soll der mittlere Korndurchmesser 5 μm nicht übersteigen.

Um eine besonders gleichmäßige Anlagerung der sauerstofffreien Borverbindung an den Metallpulverteilchen sicherzustellen, können die Metallpulverkörner vor der Anlagerung des Borid- oder Bornitridpulvers mit einer Wachsschicht überzogen werden, die unterhalb der Sintertemperatur restlos verdampft. Das Borid- bzw. Bornitridpulver bleibt an der Wachsschicht gut haften, die beim Erwärmen der Pulverschüttung bzw. des Preßlings abdampft, bevor eine flüssige Phase auftritt. Als Wachs kann dabei ein in der Pulvermetallurgie übliches Gleitmittel eingesetzt werden, das bereits bei ca. 500 °C rückstandsfrei verdampft. Wird das Wachs in einem Lösungsmittel, beispielsweise Xylol, gelöst und das Metallpulver mit dieser Lösung übergossen, so kann durch ein Abdampfen des Lösungsmittels auf die Metallpulverkörner eine gleichmäßige Wachsschicht aufgebracht werden, wobei die Stärke der Wachsschicht, die 1 bis 10 μm betragen soll, durch die Menge des Lösungsmittels eingestellt werden kann. Die der Wachsschicht behafteten Pulver werden dann zusammen mit dem Pulver der sauerstofffreien Borverbindung in einem Mischer gemischt.

Zur Vermeidung einer Entmischung von Metallpulvern und Boridpulvern bei der Handhabung und bei der Lagerung der Pulvermischung können die Boridpulver auch an die Oberfläche der Metallpulver angesintert werden.

Um zu verhindern, daß sich die Oxidschichten auf den Metallkörnern fortlaufend neu bilden können, ist dafür zu sorgen, daß das mit der sauerstofffreien Borverbindung vermischte Metallpulver in einer sauerstofffreien bzw. sauerstoffarmen Umgebung gesintert wird. Obwohl die Sinterung in einem gereinigten Inertgas, beispielsweise Argon, durchaus vorteilhaft durchgeführt werden kann, ergeben sich besonders wirtschaftliche Verhältnisse, wenn das mit der sauerstofffreien Borverbindung vermischte Metallpulver in einem Vakuum, vorzugsweise bei einem Druck kleiner als $10^{-2}$ mbar, gesintert wird.

Untersuchungen zeigten, daß die mit Borid- bzw. Bornitridzusätzen gesinterten Filterkörper eine hervorragende Korrosionsbeständigkeit aufweisen. Die Gegenwart der eutektischen Phasen in den porösen Körpern beeinflußt die Korrosionsbeständigkeit nicht merkbar, so daß bei gleicher Porigkeit und bei gleicher Matrix-Korngröße praktisch die gleiche Beständigkeit wie bei Filterkörpern gemessen wird, die keinen Borzusatz enthalten.

Beispiel 1

Zur Herstellung eines zylindrischen Filterkörpers aus Sonderstahl wurde von einem Sonderstahlpulver AISI 316L (Fe-18 %Cr-8 %Ni-2 %Mo) mit einem mittleren Korndurchmesser von 0,5 mm ausgegangen. Dieses Pulver wurde in einem Mischgefäß mit in Benzol gelöstem Na-Stearat übergossen, wobei für 100 g Metallpulver 0,8 g Stearat in 40 ml Benzol gelöst wurde. Nach einem sorgfältigen Umrühren wurde das Mischgefäß in einen Exsikkator eingesetzt und das Benzol abgedampft. Diesem mit dem Stearat beschichteten Metallpulver wurde dann Bornitrid in einer Menge von 0,4 g je 100 g Metallpulver zugegeben und während 30 min auf einem Walzenstuhl gemischt, bevor das Gemisch in eine zweiteilige, aus einem Kern und einem Mantel bestehende, zylindrische Form aus 80 % $Al_2O_3$ und 20 % $SiO_2$ eingefüllt wurde. Durch Vibration wurde die Pulverschüttung verdichtet, bis keine Setzung mehr beobachtet werden konnte. Anschließend wurde die Form mit einer keramischen Platte abgedeckt und in einen Vakuumofen eingesetzt, der auf einen Druck unterhalb von $10^{-2}$ mbar evakuiert wurde. Innerhalb von 2 h wurde der Vakuumofen auf eine Temperatur von 1 170 °C aufgeheizt und während 1 h auf dieser Temperatur gehalten. Nach dem Abschalten der Ofenheizung und einem Abkühlen des Ofens auf Raumtemperatur wurde die Form entnommen und der Sinterkörper entformt.

Beispiel 2

Um einen dichten Sinterkörper aus Sonderstahl mit einer Restporosität von 10 % herzustellen, wurde ein Sonderstahlpulver entsprechend dem Beispiel 1, jedoch mit einer nadeligen Kornform mit einem NiB-Pulver (mittlerer Korndurchmesser kleiner als 5 $\mu$m) zusammen mit einem Preßhilfsmittel vermischt, wobei die Menge des NiB-Pulvers 0,75 Gew.% und des Preßhilfsmittels 0,5 Gew.% von der Metallpulvermenge betrug. Dieses Gemisch wurde bei einem Druck von 600 MPa verdichtet und der Preßling in einem Vakuumofen entsprechend dem Beispiel 1 gesintert.

Beispiel 3

Eine in einem Taumelmischer während zwei Stunden sorgfältig vermengte Mischung aus einem Sonderstahlpulver AISI 316L mit einem mittleren Korndurchmesser von 200 $\mu$m und aus 0,4 Gew.% NiB-Pulver mit einem mittleren Korndurchmesser unter 20 $\mu$m wurde in eine Form eingerüttelt und 30 min. unter einem Vakuum von $10^{-2}$ mbar bei einer Temperatur von 1 150 °C gesintert. Das Filter ließ sich ohne Schwierigkeiten aus der Form entnehmen. Die Zugfestigkeit des Sinterwerkstoffes betrug 100 N/mm², wobei eine Schlagfestigkeit von 6 J/cm² und eine Bruchdehnung größer als 10 % bei einer Porosität von 35 % erreicht wurde.

Beispiel 4

Ein Sonderstahlpulver AISI 316L mit einem mittleren Korndurchmesser von 100 $\mu$m wurde mit 0,2 Gew.% eines Bornitridpulvers mit einem mittleren Korndurchmesser unter 5 $\mu$m drei Stunden sorgfältig in einem Taumelmischer gemischt. Die erhaltene Pulvermischung wurde dann in einer Form bei einer Temperatur von 1 160 °C unter einem Vakuum von $10^{-2}$ mbar gesintert. Der erhaltene Filterkörper wies eine Porosität von 30 %, eine Zugfestigkeit von 120 N/mm² und eine Bruchdehnung von mehr als 10 % auf.

**Patentansprüche**

1. Verfahren zum Herstellen von porösen Filterkörpern aus Metallpulver, das in einer Form oder als geformter Preßling auf Sintertemperatur erwärmt und gesintert wird, wobei vor dem Einbringen des Metallpulvers in die Form bzw. vor dem Formpressen des Metallpulvers zumindest an die eine Oxidschicht aufweisenden Pulverkörner eine sauerstofffreie Borverbindung in Pulverform angelagert wird, dadurch gekennzeichnet, daß dem Metallpulver als sauerstofffreie Borverbindung entweder Bornitrid oder ein Borid in einer Menge von höchstens 1 Gew.% beigemischt wird und daß dann das Pulvergemisch bei einer in °C angegebenen Temperatur zwischen $T_1 = 950 + 450$ $d^{1\,2} - 150$ g und $T_2 = 1\,100 + 450$ $d^{1\,2} - 150$ g beim Einsatz von Bornitrid und zwischen $T_{1'} = 1\,080 + 250$ $d^{1\,2} - 250$ g und $T_{2'} = 1\,200 + 250$ $d^{1\,2} - 250$ g beim Einsatz eines Borides gesintert wird, wobei für d der in mm gemessene mittlere Korndurchmesser des Metallpulvers und für g der Zusatz der sauerstofffreien Borverbindung in Gew.% einzusetzen sind.

2. Verfahren nach Anspruch 1, dadurch gekennzeichnet, daß ein Boridpulver mit einem mittleren Korndurchmesser kleiner als 20 $\mu$m, vorzugsweise kleiner als 10 $\mu$m eingesetzt wird.

3. Verfahren nach Anspruch 1, dadurch gekennzeichnet, daß ein Bornitridpulver mit einem mittleren Korndurchmesser kleiner als 5 $\mu$m beigemischt wird.

4. Verfahren nach einem der Ansprüche 1 bis 3, dadurch gekennzeichnet, daß zumindest die eine Oxidschicht aufweisenden Pulverkörner vor der Anlagerung des Borid- oder Bornitridpulvers mit einer Wachsschicht überzogen werden, die unterhalb der Sintertemperatur restlos verdampft.

**Claims**

1. A process of producing porous filter bodies from metal powder, which is heated to a sintering temperature and sintered in a mould or as a moulded compact and an oxygenfree boron compound in the form of a powder is bonded at least to those powder particles which have an oxide layer before the metal powder is introduced into the mould or before the metal powder is compression-moulded, characterized in that an oxygenfree boron compound consisting of boron nitride or of a boride in a quantity amounting to 1 % by weight, at most, is admixed to the metal powder and the mixed powders are then sintered at a temperature in °C between $T_1 = 950 + 450$ $d^{1/2} - 150$ g and $T_2 = 1\,100 + 450$ $d^{1/2} - 150$ g where boron nitride is used and between $T_{1'} = 1\,080 + 250$ $d^{1/2} - 250$ g and $T_{2'} = 1\,200 + 250$ $d^{1/2} - 250$ g if a boride is used, wherein d is the average particle size of the metal powder in millimetres and g is the quantity in which the oxygen-free boron compound is added in % by weight.

2. A process according to claim 1, characterized in that a boride powder is used which has an average particle diameter below 20 $\mu$m, preferably below 10 $\mu$m.

3. A process according to claim 1, characterized in that a boron nitride powder is admixed which has an average particle diameter below 5 $\mu$m.

4. A process according to any of claims 1 to 3, characterized in that at least those particles which have an oxide layer are coated before the bonding of the boride or boron nitride powder with a wax layer which entirely evaporates below the sintering temperature.

## Revendications

1. Procédé pour fabriquer des éléments filtrants poreux à partir d'une poudre métallique qui est chauffée à la température de frittage, dans un moule ou sous la forme d'une ébauche moulée et frittée, procédé dans lequel, avant l'introduction de la poudre métallique dans le moule, ou avant le moulage de la poudre métallique, on dépose, du moins sur les grains de poudre qui présentent une couche d'oxyde, un composé de bore exempt d'oxygène sous une forme pulvérulente, caractérisé par le fait que l'on mélange à la poudre métallique, en qualité de composé de bore exempt d'oxygène, soit du nitrure de bore, soit un borure, en une quantité atteignant au maximum 1 % en poids, que l'on fritte ensuite le mélange de poudre à une température, qui indiquée en °C, est comprise entre $T_1 = 950 + 450\ d^{1.2} - 150\ g$ et $T_2 = 1\ 100 + 450\ d^{1.2} - 150\ g$ dans le cas de l'utilisation de nitrure de bore, et comprise entre $T_1 = 1\ 080 + 250\ d^{1.2} - 250\ g$ et $T_2 = 1\ 200 + 250\ d^{1.2} - 250\ g$ dans le cas de l'utilisation d'un borure, formule dans laquelle on introduit pour d le diamètre moyen des grains de la poudre métallique, mesuré en mm, et pour g, l'addition du composé de bore exempt d'oxygène en % en poids.

2. Procédé selon la revendication 1, caractérisé par le fait que l'on utilise une poudre de borure possédant un diamètre moyen de grain inférieur à 20 μm, de préférence inférieur à 10 μm.

3. Procédé selon la revendication 1, caractérisé par le fait que l'on ajoute une poudre de nitrure de bore possédant un diamètre moyen de grain inférieur à 5 μm.

4. Procédé selon une des revendications 1 à 3, caractérisé par le fait qu'au moins les grains de poudre qui présentent une couche d'oxyde sont revêtus, avant le dépôt de la poudre de borure ou de nitrure de bore, d'une couche de cire se vaporisant entièrement à une température inférieure à la température de frittage.